# EUROPÄISCHE PATENTANMELDUNG

(11) **EP 2 243 613 A1**
(43) Veröffentlichungstag der Anmeldung: **27.10.2010**
(21) Anmeldenummer: 09158366.6
(22) Anmeldetag: 21.04.2009
(51) Int. Cl.: B29C 45/27, B29C 45/28

(54) **Düsenvorrichtung und Verfahren zum Anspritzen von Kunststoffformteilen**

(71) Anmelder: Schreck, Hans, 35099 Burgwald-Bottendorf (DE)
(72) Erfinder: Schreck, Hans, 35099 Burgwald-Bottendorf (DE)
(74) Vertreter: Tappe, Hartmut

(57) **Zusammenfassung**

Die Erfindung betrifft eine Düsenvorrichtung sowie ein Verfahren zum Anspritzen von Kunststoffformteilen, wobei die Düsenvorrichtung (10) in ein Formwerkzeug (13) einsetzbar ist, derart, das plastifiziertes Kunststoffmaterial über eine Zuführleitung (20) einem Einspritzkanal (21) der Düsenvorrichtung zuführbar ist, wobei durch den Einspritzkanal Kunststoffmaterial geleitet und in eine Formkavität des Formwerkzeugs eingespritzt werden kann, wobei in der Düsenvorrichtung ein Bypasskanal (23) ausgebildet ist, durch den ein Strom von Kunststoffmaterial zumindest abschnittsweise in einen Hauptstrom und in einen Teilstrom teilbar ist, wobei der Hauptstrom durch den Einspritzkanal und wobei der Teilstrom durch den Bypasskanal leitbar ist, derart, dass alle Bereich des Einspritzkanals von Kunststoffmaterial durchströmt werden können.

## Beschreibung

Die Erfindung betrifft eine Düsenvorrichtung und ein Verfahren zum Anspritzen von Kunststoffformteilen, wobei die Düsenvorrichtung in ein Formwerkzeug einsetzbar ist, derart, dass plastifiziertes Kunststoffmaterial über eine Zuführleitung einem Einspritzkanal der Düsenvorrichtung zurführbar ist, wobei durch den Einspritzkanal Kunststoffmaterial geleitet und in eine Formkavität des Formwerkzeugs eingespritzt werden kann.

Die aus dem Stand der Technik bekannten Düsenvorrichtungen umfassen regelmäßig einen Düsenkörper, der in ein Spritzgießwerkzeug eingesetzt wird, derart, dass mittels der Düsenvorrichtung eine Formkavität mit plastifiziertem Kunststoffmaterial befüllt werden kann. Je nach Anwendungsfall werden verschiedene Düsenvorrichtungen verwandt. So sind Düsenvorrichtungen bekannt, die über eine Mehrzahl von Düsenspitzen verfügen und zum seitlichen und direktem Anspritzen von Formkavitäten dienen. Weiter kann eine Düsenvorrichtung zur Direkteinspritzung in eine Formkavität ausgebildet sein, das heißt an einem Ende eines Düsenkörpers ist ein Spitzenelement vorgesehen, das einen Einspritzkanal ausbildet. Diese Art der Düsenvorrichtung kann zusätzlich mit einer Düsennadel ausgestattet sein, die ein Öffnen und Schließen des Einspritzkanals ermöglicht. Alle diese Düsenvorrichtungen bilden ausgehend von der Formkavität einen oder je nach Anzahl der Formkavitäten mehrere Einspritzkanäle aus, der bzw. die mit einer Zuführleitung verbunden sind. Die Zuführleitung dient zur Förderung des Kunststoffmaterials zu dem Einspritzkanal bzw. den Einspritzkanälen der Düsenvorrichtung.

Bei der Düsenvorrichtung zum seitlichen Anspritzen sind beispielsweise die jeweiligen Düsenspitzen im Einspritzkanal angeordnet, wobei eine Zuführleitung quer zum Einspritzkanal in diesen mündet. Da die Düsenvorrichtungen zum Plastifizieren des Kunststoffmaterials beheizt sind, wird das Kunststoffmaterial auf einem im Wesentlichen gleich bleibend hohen Temperaturniveau gehalten. Bei Austritt des Kunststoffmaterials aus der Zuführleitung tritt dieses in den Einspritzkanal ein und trifft auf die Düsenspitze. Das Kunststoffmaterial fließt weiter in Richtung der Formkavität, wobei die Düsenspitze von dem Kunststoffmaterial umströmt wird. Auf einer gegenüber der Zuführleitung abgewandten Seite der Düsenspitze befindet sich ein Bereich des Einspritzkanals in dem im Wesentlichen keine kontinuierliche Durchströmung des Einspritzkanals mit geschmolzenem Kunststoffmaterial erfolgt. Dieser Bereich wird als so genannter Fließschatten oder als tote Ecke bezeichnet, da hier eine vollständige Durchströmung des Einspritzkanals durch die als Barriere wirkende Düsenspitze verhindert wird. Demnach wird das in diesem Bereich befindliche Kunststoffmaterial nicht durch nachströmendes Kunststoffmaterial ersetzt. Infolge dessen erfolgt eine Zerstörung dieses Kunststoffmaterials durch dauerhaft einwirkende Temperierung. Lösen sich derartige Kunststoffmengen während eine Produktionsprozesses, führt dies zu Qualitätseinbußen bei den produzierten Spritzgussteilen. Auch besteht bei einem herstellungsbedingten Wechsel zwischen Kunststoffen mit verschiedenen Eigenschaften, beispielsweise Farben, das Problem, dass im Bereich des Fließschattens ein andersfarbiger Kunststoff zurückbleibt, der sich lösen und Formteile verfärben kann.

Auch bei der Verwendung einer Düsennadel tritt das vorbeschriebene Problem auf, da hier eine Zuführleitung regelmäßig quer zu einem Einspritzkanal angeordnet und die Düsennadel im Einspritzkanal positioniert ist. Weiter ist bei der Direkteinspritzung das Spitzenelement so angeordnet, dass zwischen dem Spitzenelement und einer Einspritzöffnung der Formkavität ein kurzer Einspritzkanalabschnitt ausgebildet ist. Das Kunststoffmaterial tritt regelmäßig an einer Seitenfläche des Spitzenelements aus, so dass auf einer gegenüberliegenden Seitenfläche des Spitzenelements ebenfalls der zuvor geschilderte negative Effekt der Ausbildung eines Fließschattens auftritt. Eine Ausnahme bilden hier Spitzenelemente bei denen der Einspritzkanal aus einer Mehrzahl von auf der Seitenfläche angeordneten Austrittsöffnungen gebildet wird. Hier wird der Einspritzkanal zumindest im Bereich des Spitzenelements und der Eintrittsöffnung der Formkavität ausreichend mit Kunststoffmaterial durchströmt. Derartige Spitzenelemente sind jedoch nur bei einer bestimmten Gestalt der Formkavität verwendbar. Häufig ist es notwendig Spitzenelemente zu verwenden, welche einen an die Gestalt der Formkavität angepassten Strömungsimpuls von Kunststoffmaterial in eine bestimmte seitliche Richtung, bewirkt durch die seitliche Lage einer Austrittsöffnung, ermöglichen.

Es ist daher Aufgabe der Erfindung, eine Düsenvorrichtung bzw. ein Verfahren zum Anspritzen von Kunststoffformteilen vorzuschlagen, die bzw. das eine Schmelzestagnation bzw. Bildung von Fließschatten in einem Einspritzkanal vermeidet.

Diese Aufgabe wird durch eine Düsenvorrichtung mit den Merkmalen des Anspruchs 1 und durch ein Verfahren mit den Merkmalen des Anspruchs 18 gelöst.

Die erfindungsgemäße Düsenvorrichtung zum Anspritzen von Kunststoffformteilen ist in ein Formwerkzeug einsetzbar, derart, dass plastifiziertes Kunststoffmaterial über eine Zuführleitung einem Einspritzkanal der Düsenvorrichtung zuführbar ist, wobei durch den Einspritzkanal Kunststoffmaterial geleitet und in eine Formkavität des Formwerkzeugs eingespritzt werden kann, wobei in der Düsenvorrichtung ein Bypasskanal ausgebildet ist, durch den ein Strom von Kunststoffmaterial zumindest abschnittsweise in einen Hauptstrom und in einen Teilstrom teilbar ist, wobei der Hauptstrom durch den Einspritzkanal und wobei der Teilstrom durch den Bypasskanal leitbar ist, derart, dass alle Bereiche des Einspritzkanals von Kunststoffmaterial durchströmt werden können.

Dem Einspritzkanal wird folglich eine Menge Kunststoffmaterial entnommen und durch den Bypasskanal hindurchgeleitet, wobei der Bypasskanal an seinem Ende wieder in den Einspritzkanal mündet. Der Bypasskanal ist dabei so angeordnet, dass Bereiche des Einspritzkanals, in denen üblicherweise eine Durchströmung von Kunststoffmaterial nicht gewährleistet ist, bzw. so genannte Fließschatten oder tote Ecken vorliegen, ausreichend mit flüssigem Kunststoffmaterial versorgt werden. Damit wird ein stetiger Wechsel von Kunststoffmaterial in allen Bereichen des Einspritzkanals gewährleistet, wodurch es zu keiner Zerstörung von Kunststoffmaterial durch länger währende Temperatureinwirkungen oder unerwünschten Farbmischungen mit den dadurch verbundenen negativen Folgen für die Qualität der herzustellenden Spritzgussteile kommt. Grundsätzlich wird so durch die Erfindung der Anforderung Rechnung getragen, einen Einspritzkanal ohne Fließschatten auszubilden, um die Qualität der Spritzgusserzeugnisse zu erhöhen.

Die Düsenvorrichtung kann dabei so ausgebildet sein, dass sie eine Mehrzahl von Bypasskanälen aufweist, die jeweils in zu Fließschattenbildung neigenden, kritische Bereiche eines Einspritzkanals münden.

Ist der durch den Bypasskanal geleitete Teilstrom kleiner als der durch den Einspritzkanal geleitete Hauptstrom von Kunststoffmaterial, kann eine unnötige Umleitung von Kunststoffmaterial vermieden werden. Der Teilstrom kann demnach so groß bemessen werden, dass er eine gerade ausreichende Menge von Kunststoffmaterial in einem kritischen Bereich des Einspritzkanals zur Verfügung stellt, die diesen so durchströmt, dass eine Zerstörung des Kunststoffmaterials vermieden wird.

Am einfachsten ist ein relativ kleiner Teilstrom ausbildbar, wenn ein Durchflussquerschnitt des Bypasskanals kleiner als ein Durchflussquerschnitt des Einspritzkanals ausgebildet ist.

Eine Düsenvorrichtung mit einem Bypasskanal ist dann besonders einfach ausbildbar, wenn die Düsenvorrichtung einen Düsenkörper und eine Spitzeneinrichtung umfasst, die den Einspritzkanal ausbilden.

Die Spitzeneinrichtung kann unter anderem ein Spitzenelement aufweisen, welches einen Einspritzkanalabschnitt des Einspritzkanals ausbildet. Das heißt ein Teilabschnitt des Einspritzkanals wird in dieser Ausführungsform einer Düsenvorrichtung vom Spitzenelement selbst ausgebildet.

In einer weiteren vorteilhaften Ausführungsform einer Düsenvorrichtung kann der Einspritzkanal mit einer Zuführleitung verbunden sein, wobei in einem Übergangsbereich zwischen der Zuführleitung und dem Einspritzkanal der Bypasskanal in der Spitzeneinrichtung als eine Durchgangsöffnung quer zu einer Längsachse der Spitzeneinrichtung ausgebildet ist, derart, dass das Kunststoffmaterial durch die Durchgangsöffnung förderbar ist. Ein aus der Zuführleitung austretender Strom von Kunststoffmaterial tritt aufgrund der Relativanordnung von Zuführleitung und Einspritzkanal so in den Einspritzkanal ein, dass der Strom quer auf die Spitzeneinrichtung auftrifft. Folglich kann sich in diesem Bereich der Spitzeneinrichtung eine erhöhte Strömungsgeschwindigkeit aufbauen. Es ist daher besonders vorteilhaft, wenn eine Eintrittsöffnung des Bypasskanals ebenfalls in diesem Bereich erhöhter Strömungsgeschwindigkeit angeordnet ist und der Bypasskanal so in der Spitzeneinrichtung angeordnet ist, dass das Kunststoffmaterial zu einem Bereich niederer Strömungsgeschwindigkeit bzw. einer Schmelzestagnation gefördert wird. Die Durchgangsöffnung kann dabei in jeder beliebigen Gestalt ausgebildet sein, die eine Förderung von Kunststoffmaterial ermöglicht.

Da Spitzeneinrichtungen als ein Bauteil bzw. eine Bauteilgruppe ausgebildet sein können, die bei einer Herstellung der Düsenvorrichtung mit dem Düsenkörper verbunden werden, kann es vorteilhaft sein, wenn die Spitzeneinrichtung eine Positioniereinrichtung zur radialen Positionierung der Spitzeneinrichtung relativ zur Zuführleitung aufweist. Damit kann gewährleistet werden, dass eine Eintrittsöffnung des Bypasskanals so gegenüber der Zuführleitung angeordnet ist, dass ein ausreichend großer Teilstrom durch den Bypasskanal durchleitbar ist. Die Positioniereinrichtung kann beispielsweise durch eine nicht rotationssymmetrische Formgebung eines Befestigungsabschnitts der Spitzeneinrichtung ausgebildet werden, die geeignet ist eine vorgesehene Lage der Spitzeneinrichtung formschlüssig zu fixieren.

Auch kann die Spitzeneinrichtung eine Düsennadel aufweisen, welche abschnittsweise innerhalb des Einspritzkanals angeordnet und längsbeweglich gelagert ist, derart, dass das Spitzenelement mit der Düsennadel verschließ- und öffenbar ist. Dann kann insbesondere eine Ausführungsform einer Düsenvorrichtung ausgebildet werden, die eine direkt steuerbare Einspritzung von Kunststoffmaterial in eine Formkavität ermöglicht und dennoch über die Vorteile der Erfindung verfügt.

Ein besonders effektiv wirksamer Bypasskanal kann in diesem Fall dann ausgebildet werden, wenn die Düsennadel so ausgebildet ist, dass der Bypasskanal in einer Öffnungsposition der Düsenvorrichtung mit der Zuführleitung fluchtet. Das heißt der Bypasskanal kann in einer Schließposition der Düsenvorrichtung so angeordnet sein, dass er nicht mit der Zuführleitung fluchtet. Dies ist insofern nicht notwendig, da in der Schließposition kein Durchfluss von Kunststoffmaterial durch den Einspritzkanal erfolgt.

In einer weiteren Ausführungsform einer Düsenvorrichtung kann die Spitzeneinrichtung eine Düsenspitze aufweisen, welche zusammen mit dem Düsenkörper und/oder dem Formwerkzeug den Einspritzkanal ausbildet. Die Düsenspitze kann so angeordnet sein, dass sie von Kunststoffmaterial umgeben ist. Je nach Länge der Düsenspitze und Gestalt des Düsenkörpers bzw. des Formwerkzeugs kann sich der Einspritzkanal ausgehend von der Zuführleitung durch den Düsenkörper hindurch bis hin in das Formwerkzeug erstrecken. Alternativ kann der Einspritzkanal jedoch auch direkt am Formwerkzeug enden oder alleine im Formwerkzeug ausgebildet sein. Auch bei dieser Ausführungsform ist es vorteilhaft, wenn die Düsenspitze so ausgebildet ist, dass der Bypasskanal der Zuführleitung gegenüberliegend ausgebildet ist.

Die Düsenvorrichtung kann dann zur seitlichen Anspritzung der Formkavität ausgebildet sein, derart, dass die Düsenspitzen quer zu einer Längsachse des Düsenkörpers angeordnet sind. So kann eine Zuführleitung beispielsweise auch in mehrere Zuführleitungen verzweigen, die jeweils zu den der jeweiligen Formkavität zugeordneten Einspritzkanälen führen. Auch ist es denkbar Düsenspitzen zu verwenden, innerhalb der ein weiterer Einspritzkanal ausgebildet ist. Der Bypasskanal kann dann so in der Düsenspitze ausgebildet sein, dass er von dem weiteren Einspritzkanal abzweigt und eine Austrittsöffnung am Umfang der Düsenspitze ausbildet.

In einer weiteren Ausführungsform einer Düsenvorrichtung können im Spitzenelement eine Austrittsöffnung des Einspritzkanals und eine den Bypasskanal ausbildende Durchgangsöffnung ausgebildet sein. Diese Öffnungskombination ist dann besonders sinnvoll, wenn die Austrittsöffnung des Einspritzkanals an einer Seitenfläche des Spitzenelements und gegenüberliegend der Austrittsöffnung der Durchgangsöffnung in der Seitenfläche angeordnet ist. Die asymmetrische Anordnung der Austrittsöffnung bewirkt einen Strömungsimpuls innerhalb des Einspritzkanals in eine vorgegebene Richtung quer zu einer Längsachse der Düsenvorrichtung. Die Düsenvorrichtung kann so an eine Gestalt einer Formkavität angepasst werden. In dem der Austrittsöffnung auf der Seitenfläche des Spitzenelements gegenüberliegenden Bereich kann durch die Anordnung der Durchgangsöffnung des Bypasskanals ein normalerweise vorhandener Fließschatten vermieden werden. Der Bypasskanal ist dann so bemessen, dass die durch den Bypasskanal geförderte Teilmenge von Kunststoffmaterial nicht primär zur Füllung der Formkavität, sondern alleine zur ausreichenden Durchströmung des vorgenannten Bereiches dient.

Um eine besonders gute Durchströmung zu erzielen, kann eine Längsachse des Bypasskanals quer zu einer Längsachse des Spitzenelements angeordnet sein.

Auch kann eine Längsachse des Bypasskanals quer zu einer Längsachse des Einspritzkanals angeordnet sein. Dann kann ebenfalls beispielsweise die Längsachse des Bypasskanals in einem Winkel α relativ zur Längsachse des Spitzenelements angeordnet sein, der größer ist, als ein Winkel β der Längsachse des Einspritzkanals relativ zu der Längsachse des Spitzenelements.

Der Bypasskanal ist besonders einfach herstellbar, wenn der Bypasskanal eine Durchgangsbohrung ist.

Alternativ kann der Bypasskanal ein Durchgangslangloch sein.

Bei dem erfindungsgemäßen Verfahren zum Anspritzen von Kunststoffformteilen mit einer Düsenvorrichtung, wird die Düsenvorrichtung in ein Formwerkzeug eingesetzt, wobei plastifiziertes Kunststoffmaterial über eine Zuführleitung einem Einspritzkanal der Düsenvorrichtung zugeführt wird, wobei durch den Einspritzkanal Kunststoffmaterial geleitet und in eine Formkavität des Formwerkzeugs eingespritzt wird, wobei die Düsenvorrichtung einen Bypasskanal ausbildet, durch den ein Strom von Kunststoffmaterial zumindest abschnittsweise in einen Hauptstrom und in einen Teilstrom geteilt wird, wobei der Hauptstrom durch den Einspritzkanal und wobei der Teilstrom durch den Bypasskanal geleitet wird, derart, dass alle Bereiche des Einspritzkanals von Kunststoffmaterial durchströmt werden.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird die Erfindung unter Bezugnahme auf die beigefügten Zeichnungen näher erläutert.

Es zeigen:
- **Fig. 1**: eine Schnittansicht einer ersten Ausführungsform einer Dü- senvorrichtung;
- **Fig. 2**: eine Schnittansicht einer Düsenspitze aus **Fig. 1****;**
- **Fig. 3**: eine Schnittansicht einer zweiten Ausführungsform einer Düsenvorrichtung entlang einer Linie IV-IV aus **Fig. 4****;**
- **Fig. 4**: eine Schnittansicht der zweiten Ausführungsform der Dü- senvorrichtung entlang einer Linie III-III aus **Fig. 3****;**
- **Fig. 5**: eine Schnittansicht einer ersten Ausführungsform einer Dü- senvorrichtung aus dem Stand der Technik;
- **Fig. 6**: eine Schnittansicht einer zweiten Ausführungsform einer Düsenvorrichtung aus dem Stand der Technik;
- **Fig. 7**: eine Schnittansicht einer dritten Ausführungsform einer Düsenvorrichtung;
- **Fig. 8**: eine Schnittansicht eines Spitzenelements aus **Fig. 7****;**
- **Fig. 9**: eine Schnittansicht einer Düsenspitze.

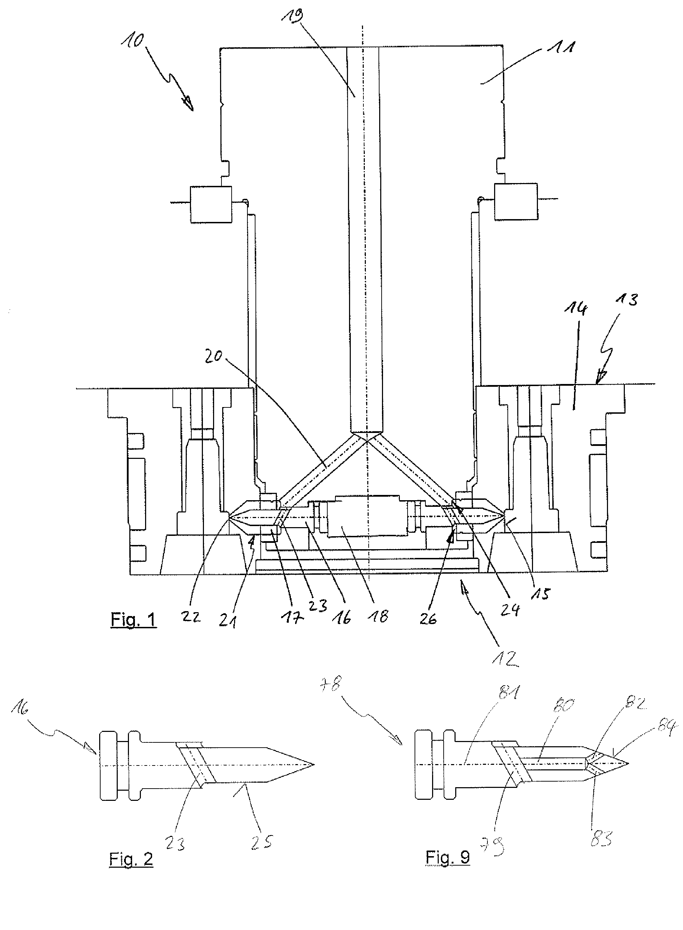

**Fig. 1** zeigt eine erste Ausführungsform einer Düsenvorrichtung 10 in einer Schnittansicht. Die Düsenvorrichtung 10 ist aus einem Düsenkörper 11 sowie einer Spitzeneinrichtung 12 gebildet und in ein Formwerkzeug 13 eingesetzt, welches hier nur teilweise mit einer ersten Werkzeughälfte 14 dargestellt ist. Die Werkzeughälfte 14 bildet hier Innenflächen 15 von nicht näher dargestellten Formkavitäten aus. Die Spitzeneinrichtung 12 umfasst eine Mehrzahl von Düsenspitzen 16, Dichtelementen 17 und ein Befestigungselement 18 zur Befestigung der Düsenspitzen 16. Im Düsenkörper 11 ist eine zentrale Zuführleitung 19 ausgebildet, die in Zuführleitungen 20 zu den Einspritzkanälen 21 verzweigt. Die Einspritzkanäle 21 werden jeweils von dem Düsenkörper 11, dem Dichtelement 17 und der Werkzeughälfte 14 sowie der Düsenspitze 16 ausgebildet und haben eine kreisringförmige Gestalt. Die Düsenspitze 16 erstreckt sich dabei von der Zuführleitung 20, aus der nicht dargestelltes, plastifiziertes Kunststoffmaterial in den Einspritzkanal 21 eintritt, bis hin zu einer Einspritzöffnung 22 in der Werkzeughälfte 14. Die Düsenspitze 16, die in **Fig. 2** vergrößert dargestellt ist, weist einen Bypasskanal 23 auf, der quer zum Einspritzkanal 21 verläuft. Der Bypasskanal 23 ist so in der Düsenspitze 16 ausgebildet, dass der Bypasskanal 23 eine Austrittsöffnung 24 der Zuführleitung 20 gegenüberliegend angeordnet ist. In den Einspritzkanal 21 eintretendes, plastifiziertes Kunststoffmaterial kann so durch den Bypasskanal 23 abgezweigt und durch die Düsenspitze 16 hindurch geleitet werden, wobei das Kunststoffmaterial auf einer der Austrittsöffnung 24 abgewandten Mantelflächenseite 25 der Düsenspitze 16 wieder in den Einspritzkanal 21 austritt. Dadurch wird sichergestellt, dass alle Bereiche des Einspritzkanals 21 von Kunststoffmaterial durchströmt werden können. Beispielhaft ist mit dem Pfeil 26 der Bereich gekennzeichnet, der bei einer hier nicht dargestellten Düsenvorrichtung aus dem Stand der Technik, also ohne einen Bypasskanal, einen sogenannten Fließschatten aufweisen bzw. eine tote Ecke ausbilden würde. Bei der Düsenvorrichtung aus dem Stand der Technik würde die tote Ecke zwar mit Kunststoffmaterial gefüllt jedoch nicht kontinuierlich durchströmt werden.

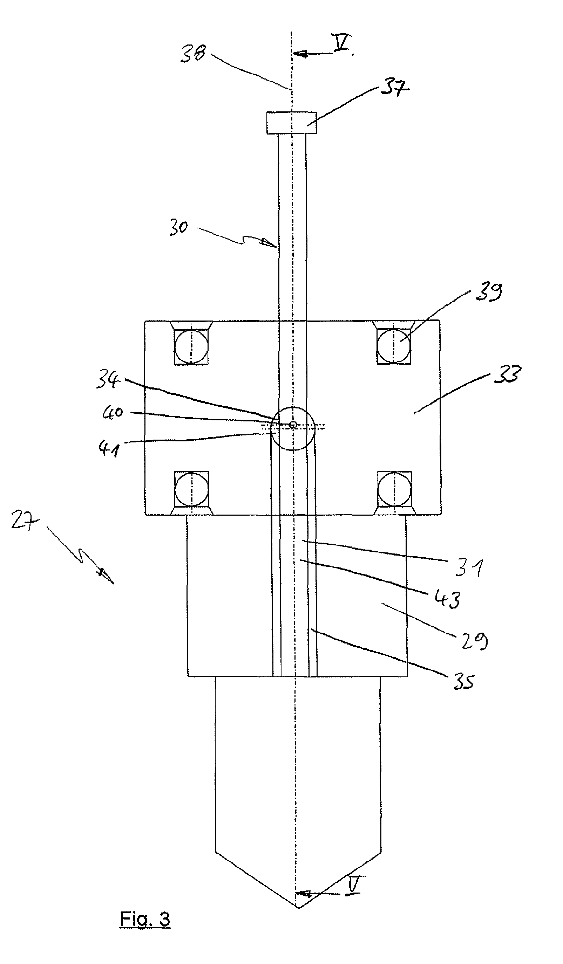

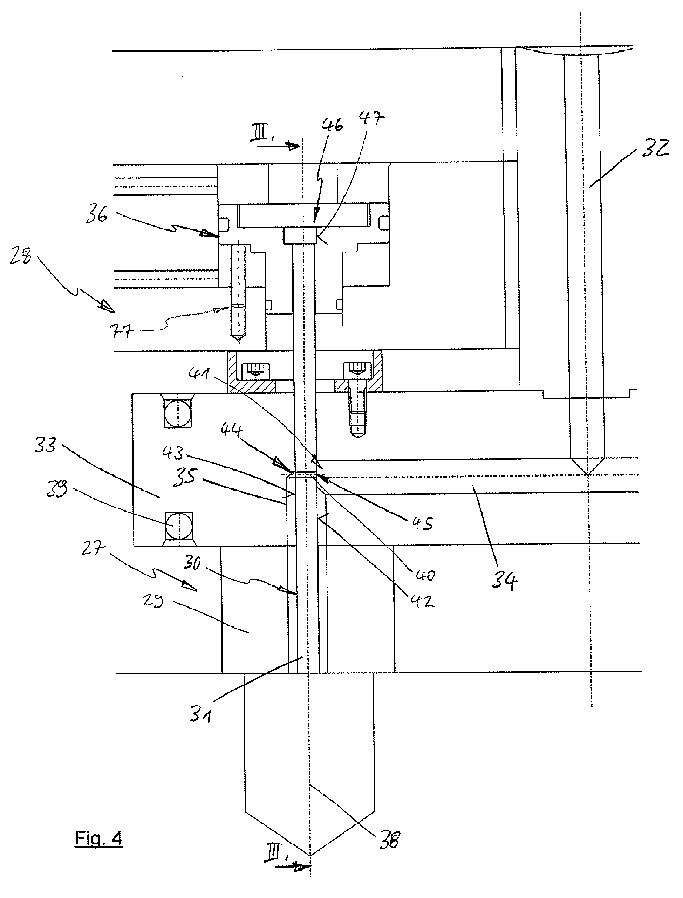

Eine Zusammenschau der **Fig. 3** und **4** zeigt eine Düsenvorrichtung 27 in jeweils verschiedenen Schnittansichten. Die Düsenvorrichtung 27 ist in ein Formwerkzeug 28 eingesetzt, wobei hier auf eine nähere Darstellung aller Werkzeugkomponenten verzichtet wurde. Die Düsenvorrichtung 27 ist aus einem Düsenkörper 29 und einer hier nur abschnittsweise dargestellten Spitzeneinrichtung 30 bzw. einer Düsennadel 31 der Spitzeneinrichtung 30 gebildet. Eine zentrale Zuführleitung 32 im Formwerkzeug 28 verzweigt in einer Verteilerplatte 33 in Zuführleitungen 34, welche jeweils in einen Einspritzkanal 35 münden. Der hier nur teilweise dargestellte Einspritzkanal 35 wird von dem Düsenkörper 29 und der Verteilerplatte 33 des Formwerkzeugs 28 ausgebildet, wobei die Düsennadel 31 koaxial im Einspritzkanal 35 angeordnet ist. Die Düsennadel 31 ist weiter in einer Kolbeneinrichtung 36 mittels eines Bunds 37 gehaltert und in Richtung einer Längsachse 38 längsbeweglich gelagert, derart, dass ein hier nicht gezeigtes Spitzenelement der Spitzeneinrichtung 30 mittels der Düsennadel 31 verschließ- und öffenbar ist. Im Übrigen sind in der Verteilerplatte 33 Heizeinrichtungen 39 vorgesehen, die eine Beheizung der Zuführleitung 34 und des Einspritzkanals 35 im Bereich des Formwerkzeugs 28 und somit eine fließfähige Plastifizierung des darin befindlichen, hier nicht dargestellten Kunststoffmaterials gewährleisten.

In der Düsennadel 31 ist ein Bypasskanal 40 ausgebildet, der gegenüberliegend einer Austrittsöffnung 41 der Zuführleitung 34 angeordnet ist und zwar wenn sich die Düsennadel 31 in der hier gezeigten Öffnungsposition befindet. Der Bypasskanal 40 fluchtet demnach mit der Zuführleitung 34, so dass auf einer der Austrittsöffnung 41 zugewandten Mantelflächeseite 42 der Düsennadel 31 auftreffendes Kunststoffmaterial durch den Bypasskanal 40 hindurchgeleitet werden und aus einer der Austrittsöffnung 41 abgewandten Mantelflächenseite 43 der Düsennadel 31 wieder aus dem Bypasskanal 40 austreten kann. Damit ist sichergestellt, dass der mit dem Pfeil 44 gekennzeichnete Bereich des Einspritzkanals 35 mit Kunststoffmaterial durchströmt wird. Um eine Anordnung einer Eintrittsöffnung 45 des Bypasskanals 40 gegenüberliegend der Austrittsöffnung 41 im Einspritzkanal 35 zu gewährleisten, ist eine Positioniereinrichtung 46 für die Düsennadel 31 vorgesehen. Am Bund 37 ist daher eine Anlagefläche 47 ausgebildet, die eine Verdrehung der Düsennadel 31 in der Kolbeneinrichtung 36 verhindert und eine lagerichtige Positionierung des Bypasskanals 40 sicherstellt. Um eine Verdrehung der Düsennadel 31 durch die Kolbeneinrichtung 36 zu verhindern, ist weiter eine Positioniereinrichtung 77 für die Kolbeneinrichtung 36 vorgesehen.

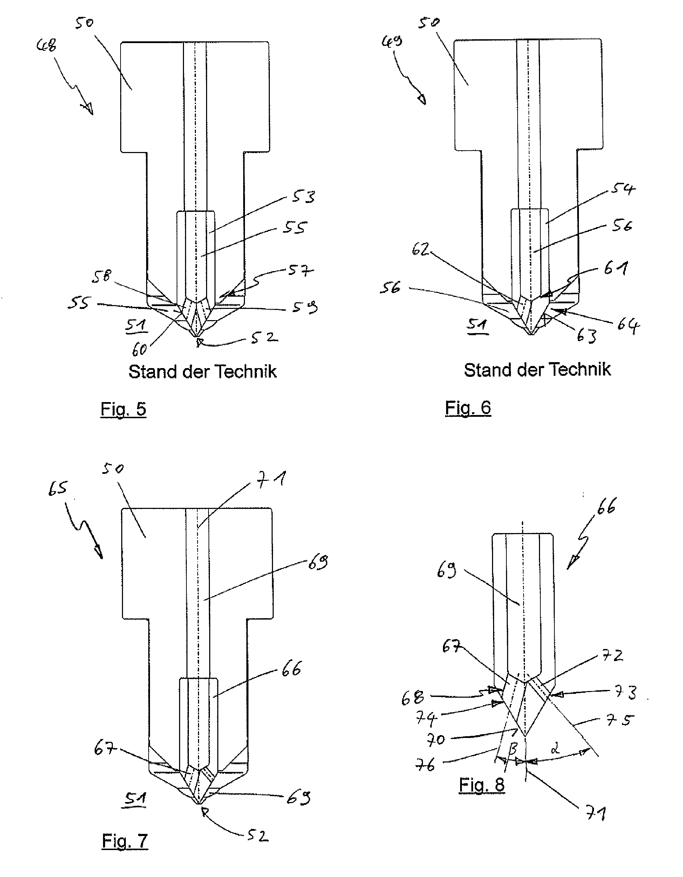

Die **Fig. 5** und **6** zeigen jeweils Düsenvorrichtungen 48 und 49 aus dem Stand der Technik. Beide Düsenvorrichtungen 48 und 49 weisen einen Düsenkörper 50 auf, der in ein Formwerkzeug 51 mit einer Einspritzöffnung 52 eingesetzt ist. Die Düsenvorrichtung 48 umfasst ein Spitzenelement 53 und die Düsenvorrichtung 49 ein Spitzenelement 54. Die Spitzenelemente 53 und 54 bilden jeweils zusammen mit dem Düsenkörper 50 und dem Formwerkzeug 51 Einspritzkanäle 55 bzw. 56 aus, die einen Durchfluss von plastifiziertem Kunststoffmaterial ermöglichen. Das Spitzenelement 53 bildet einen Einspritzkanalabschnitt 57 aus, der durch zwei Durchgangsöffnungen 58 und 59 gebildet wird. Demnach bilden die Durchgangsöffnungen 58 und 59 den Einspritzkanal 55 in dem Einspritzkanalabschnitt 57 aus und dienen primär der Zuführung von Kunststoffmaterial in die Formkavität bzw. das Formwerkzeug 51. Die Durchgangsöffnungen 58 und 59 sind so am Spitzenelement 53 angeordnet, dass das Kunststoffmaterial an einer kegeligen Außenfläche 60 des Spitzenelements 53 austritt, den Einspritzkanal 55 weiter durchströmt und in die Einspritzöffnung 52 eintritt.

Im Unterschied dazu weist das Spitzenelement 54 in einem Einspritzkanalabschnitt 61 eine einzelne Durchgangsöffnung 62 in Art der Durchgangsöffnung 58 auf. Auf einer der Durchgangsöffnung 62 abgewandten Seite einer kegeligen Außenfläche 63 des Spitzenelements 54 erfolgt keine Durchströmung des Einspritzkanals 56 mit frischem Kunststoffmaterial. Das heißt in dem mit dem Pfeil 64 gekennzeichneten Bereich des Einspritzkanals 56 erfolgt eine so genannte Schmelzestagnation, die zu einer Zerstörung des in diesem Bereich befindlichen Kunststoffmaterials führt. Bei der in der **Fig. 5** dargestellten Düsenvorrichtung 48 ist hingegen der Einspritzkanal 55 so ausgebildet, dass keine Schmelzestagnation erfolgen kann. Die Anordnung der beiden Durchgangsöffnungen 58 und 59 im Spitzenelement 53 dient jedoch primär der Ausbildung eines gerichteten Strömungsimpulses für den Eintritt von Kunststoffmaterial in die Einspritzöffnung 52. Bei dem Spitzenelement 54 ist hingegen die Ausbildung eines Strömungsimpulses in eine Richtung quer zur Düsenvorrichtung 50 vorgesehen, um die Einspritzung an eine bestimmte Gestalt der Formkavität anzupassen. Demnach kann die aus dem Stand der Technik bekannte Düsenvorrichtung 48 nicht der Vermeidung einer Schmelzestagnation dienen, da hier die erforderliche Anordnung der Düsenöffnungen 58 und 59 durch eine hier nicht gezeigte Gestalt der Formkavität vorbestimmt ist.

Die in **Fig. 7** dargestellte Düsenvorrichtung 65 umfasst im Unterschied zu den in den **Fig. 5** und **6** dargestellten Düsenvorrichtungen ein Spitzenelement 66, welches in **Fig. 8** näher dargestellt ist. Das Spitzenelement 66 weist eine Durchgangsöffnung 67 auf, die einen Einspritzkanalabschnitt 68 eines Einspritzkanals 69 ausbildet. Die Durchgangsöffnung 67 bildet demnach den Einspritzkanal 69 in dem Einspritzkanalabschnitt 68 aus und ermöglicht einen Austritt von Kunststoffmaterial aus einer kegeligen Außenfläche 70 des Spitzenelements 66 so, dass das Kunststoffmaterial mit einem Strömungsimpuls in eine von einer Längsachse 71 der Düsenvorrichtung 65 abweichenden Richtung in die hier nicht gezeigte Formkavität bzw. deren Eintrittsöffnung 52 eingespritzt werden kann. Weiter ist im Spitzenelement 66 ein Bypasskanal 72 ausgebildet, der wie die Durchgangsöffnung 67 quer zu der Längsachse 71 orientiert ist und auf der, der Durchgangsöffnung 67 gegenüberliegenden Außenfläche 70 aus dem Spitzenelement 66 austritt. Ein Öffnungsquerschnitt 73 des Bypasskanals 72 ist wesentlich kleiner bemessen als ein Öffnungsquerschnitt 74 des Einspritzkanals 69, der durch die Durchgangsöffnung 67 gebildet wird. Das heißt der Öffnungsquerschnitt 73 ist so groß, dass gerade eine ausreichende Durchströmung des Bereichs 64 mit Kunststoffmaterial gewährleistet wird. Im Übrigen ist ein Winkel α einer Längsachse 75 des Bypasskanals 72 relativ zu der Längsachse 71 der Düsenvorrichtung 65 größer als ein Winkel β einer Längsachse 76 der Durchgangsöffnung 67 relativ zur Längsachse 71. Dies ermöglicht eine besonders gute Durchströmung des Bereichs 64 und wird möglich, da das durch den Bypasskanal 72 geförderte Kunststoffmaterial nicht zur Ausbildung eines Impulsstroms bzw. primär zur Füllung der Formkavität dient.

**Fig. 9** zeigt eine Düsenspitze 78, die im Unterschied zu der Düsenspitze in **Fig. 2** einen Bypasskanal 79 aufweist, von dem ein Einspritzkanalabschnitt 80 abzweigt. Das heißt der Einspritzkanalabschnitt 80, und damit ein Teilabschnitt eines hier nicht vollständig dargestellten Einspritzkanals, wird in dieser Ausführungsform von der Düsenspitze 78 selbst ausgebildet. Der Einspritzkanalabschnitt 80 ist koaxial zu einer Längsachse 81 der Düsenspitze 78 ausgebildet und verzweigt wiederum in Einspritzkanalteilabschnitte 82 und 83, welche an einer kegeligen Außenfläche 84 der Düsenspitze 78 aus dieser austreten.

## Patentansprüche

1. . Düsenvorrichtung (10, 27, 65) zum Anspritzen von Kunststoffformteilen, wobei die Düsenvorrichtung in ein Formwerkzeug (13, 28, 51) einsetzbar ist, derart, dass plastifiziertes Kunststoffmaterial über eine Zuführleitung (20, 34) einem Einspritzkanal (21, 35, 69) der Düsenvorrichtung zuführbar ist, wobei durch den Einspritzkanal Kunststoffmaterial geleitet und in eine Formkavität des Formwerkzeugs eingespritzt werden kann,
**dadurch gekennzeichnet,**
**dass** in der Düsenvorrichtung ein Bypasskanal (23, 40, 72, 79) ausbildet ist, durch den ein Strom von Kunststoffmaterial zumindest abschnittsweise in einen Hauptstrom und in einen Teilstrom teilbar ist, wobei der Hauptstrom durch den Einspritzkanal und wobei der Teilstrom durch den Bypasskanal leitbar ist, derart, dass alle Bereiche des Einspritzkanals von Kunststoffmaterial durchströmt werden können.

2. . Düsenvorrichtung nach Anspruch 1,
**dadurch gekennzeichnet,**
**dass** der Teilstrom kleiner als der Hauptstrom ist.

3. . Düsenvorrichtung nach Anspruch 2,
**dadurch gekennzeichnet,**
**dass** ein Durchflussquerschnitt des Bypasskanals (23, 40, 72, 79) kleiner als ein Durchflussquerschnitt des Einspritzkanals (21, 35, 69) ausgebildet ist.

4. . Düsenvorrichtung nach einem der vorangehenden Ansprüche,
**dadurch gekennzeichnet,**
**dass** der Einspritzkanal (21, 35, 69) zumindest von einem Düsenkörper (11, 29, 50) und einer Spitzeneinrichtung (12, 30) der Düsenvorrichtung (10, 27, 65) gebildet wird.

5. . Düsenvorrichtung nach Anspruch 4,
**dadurch gekennzeichnet,**
**dass** die Spitzeneinrichtung ein Spitzenelement (66) aufweist, welches einen Einspritzkanalabschnitt (68) des Einspritzkanals (69) ausbildet.

6. . Düsenvorrichtung nach Anspruch 4,
**dadurch gekennzeichnet,**
**dass** der Einspritzkanal (21, 35) mit einer Zuführleitung (20, 34) verbunden ist, wobei in einem Übergangsbereich zwischen der Zuführleitung und dem Einspritzkanal der Bypasskanal (23, 40, 79) in der Spitzeneinrichtung (12, 30) als eine Durchgangsöffnung quer zu einer Längsachse (38, 81) der Spitzeneinrichtung ausgebildet ist, derart, dass das Kunststoffmaterial durch die Durchgangsöffnung förderbar ist.

7. . Düsenvorrichtung nach Anspruch 6,
**dadurch gekennzeichnet,**
**dass** die Spitzeneinrichtung (12, 30) eine Positioniereinrichtung (46) zur radialen Positionierung der Spitzeneinrichtung relativ zur Zuführleitung (20, 34) aufweist.

8. . Düsenvorrichtung nach einem der vorangehenden Ansprüche,
**dadurch gekennzeichnet,**
**dass** die Spitzeneinrichtung (30) eine Düsennadel (31) aufweist, welche abschnittsweise innerhalb des Einspritzkanals (35) angeordnet und längsbeweglich gelagert ist, derart, dass das Spitzenelement mit der Düsennadel verschließ- und öffenbar ist.

9. . Düsenvorrichtung nach Anspruch 8,
**dadurch gekennzeichnet,**
**dass** die Düsennadel (31) so ausgebildet ist, dass der Bypasskanal (40) in einer Öffnungsposition der Düsenvorrichtung (27) mit dem Zuführkanal (34) fluchtet.

10. . Düsenvorrichtung nach Anspruch 6 oder 7,
**dadurch gekennzeichnet,**
**dass** die Spitzeneinrichtung (12) eine Düsenspitze (16, 78) aufweist, welche zusammen mit dem Düsenkörper (11) und/oder dem Formwerkzeug (13) den Einspritzkanal (21) ausbildet.

11. . Düsenvorrichtung nach Anspruch 10,
**dadurch gekennzeichnet,**
**dass** die Düsenspitze (16, 78) so ausgebildet ist, das der Bypasskanal (23, 79) dem Zuführkanal (20) gegenüberliegend ausgebildet ist.

12. . Düsenvorrichtung nach Anspruch 10 oder 11,
**dadurch gekennzeichnet,**
**dass** die Düsenvorrichtung (10) zur seitlichen Anspritzung der Formkavität ausgebildet ist, derart, dass die Düsenspitzen (16, 78) quer zu einer Längsachse des Düsenkörpers (11) angeordnet sind.

13. . Düsenvorrichtung nach Anspruch 5,
**dadurch gekennzeichnet,**
**dass** im Spitzenelement (66) eine Austrittsöffnung (67) des Einspritzkanals (69) und eine den Bypasskanal (72) ausbildende Durchgangsöffnung ausgebildet ist.

14. . Düsenvorrichtung nach Anspruch 13,
**dadurch gekennzeichnet,**
**dass** eine Längsachse (75) des Bypasskanals (72) quer zu einer Längsachse (71) des Spitzenelements (66) angeordnet ist.

15. . Düsenvorrichtung nach einem der vorangehenden Ansprüche,
**dadurch gekennzeichnet,**
**dass** eine Längsachse (75) des Bypasskanals (72) quer zu einer Längsachse (76) des Einspritzkanals (69) angeordnet ist.

16. . Düsenvorrichtung nach einem der vorangehenden Ansprüche,
**dadurch gekennzeichnet,**
**dass** der Bypasskanal (23, 40, 72, 79) eine Durchgangsbohrung ist.

17. . Düsenvorrichtung nach einem der Ansprüche 1 bis 15,
**dadurch gekennzeichnet,**
**dass** der Bypasskanal ein Durchgangslangloch ist.

18. . Verfahren zum Anspritzen von Kunststoffformteilen mit einer Düsenvorrichtung (10, 27, 65), die in ein Formwerkzeug (13, 28, 51) eingesetzt wird, wobei plastifiziertes Kunststoffmaterial über eine Zuführleitung (20, 34) einem Einspritzkanal (21, 35, 69) der Düsenvorrichtung zugeführt wird, wobei durch den Einspritzkanal Kunststoffmaterial geleitet und in eine Formkavität des Formwerkzeugs eingespritzt wird,
**dadurch gekennzeichnet,**
**dass** die Düsenvorrichtung einen Bypasskanal (23, 40, 72, 79) ausbildet, durch den ein Strom von Kunststoffmaterial zumindest abschnittsweise in einen Hauptstrom und in einen Teilstrom geteilt wird, wobei der Hauptstrom durch den Einspritzkanal und wobei der Teilstrom durch den Bypasskanal geleitet wird, derart, dass alle Bereiche des Einspritzkanals von Kunststoffmaterial durchströmt werden.
